Europäisches Patentamt

European Patent Office

Office européen des brevets

(11) Publication number: **0 142 562**
**B1**

(12) **EUROPEAN PATENT SPECIFICATION**

(45) Date of publication of patent specification: **27.12.90**

(51) Int. Cl.⁵: **G 06 F 9/28, G 06 F 9/26**

(21) Application number: **84900531.9**

(22) Date of filing: **11.01.84**

(86) International application number:
**PCT/JP84/00002**

(87) International publication number:
**WO 84/02785 19.07.84 Gazette 84/17**

(54) PIPELINE SYSTEM FOR MICROPROGRAM CONTROL UNIT.

(30) Priority: **14.01.83 JP 3318/83**

(43) Date of publication of application:
**29.05.85 Bulletin 85/22**

(45) Publication of the grant of the patent:
**27.12.90 Bulletin 90/52**

(84) Designated Contracting States:
**DE GB**

(56) References cited:
**DE-A-2 445 390**
**JP-A-47 016 045**
**JP-A-48 045 149**
**JP-A-51 069 965**
**US-A-3 800 293**

**IBM TECHNICAL DISCLOSURE BULLETIN, vol. 16, no. 2, July 1973, pages 438-440, New York, US; M. FAIX et al.: "Increasing the effective speed of a microprogram store"**

(73) Proprietor: **HITACHI, LTD.**
**6, Kanda Surugadai 4-chome**
**Chiyoda-ku, Tokyo 100 (JP)**

(72) Inventor: **KIKUCHI, Syuji**
**Hitachi Fujimi-ryo, 1545 Yoshida-cho, Totsuka-ku**
**Yokohama-shi Kanagawa 244 (JP)**

(74) Representative: **Altenburg, Udo, Dipl.-Phys. et al**
**Patent- und Rechtsanwälte Bardehle-Pagenberg-Dost-Altenburg & Partner Postfach 86 06 20**
**D-8000 München 86 (DE)**

(56) References cited:
**Joho Shori, Vol. 14, No. 6, June 1973 (Nippon), Mizoguchi Tetsuya "Micro-programm . Control Hoshiki to sono Sekkei" Page 384, Fig. 10**

**Description**

The present invention relates to a pipeline system for a microprogram control apparatus according to the preamble of claim 1.

The prior art will be described hereunder, taking as an example a pattern generator acting as a tester of LSI devices such as memories, which is used as a microprogram control apparatus.

Test patterns employed for testing LSI devices such as memories are usually generated by a microprogram control system. One cycle thereof comprises the operations of specifying an address at which an instruction is stored, reading the instruction, and decoding and executing it, so that the minimum period of the cycle is limited by the total of the minimum times required for each operation.

The increasing operating speed of the elements being tested has led to a demand for an increase in the operating speed of LSI testers, particularly of the test pattern generator thereof.

The best method known for increasing the speed of generation of test patterns in a microprogram control system is to read and execute instructions concurrently using a pipeline system. Even in this system, however, it takes one cycle between the specification of an address by a program counter to the storing of an instruction held therein in a pipeline register. Consequently, a time length equivalent to two cycles is required for the program counter to specify the address at which a conditional branch instruction is stored, read out this instruction, and specify the subsequent address, so that the second cycle becomes a dummy cycle during which the subsequent address is not certain.

Therefore, if a dummy cycle is generated during the execution of a test by an LSI tester, two cycles become needed for generating the test pattern during the period in which that dummy cycle is generated, so that it is impossible to expect the execution of a normal test in real time.

Document JP—A—48 45 149 describes a microprogram control system with two separated memory units, a control memory and an auxiliary memory being an associative storage. For the control memory and the auxiliary memory two sets of address registers are used, one for the control memory and one for the auxiliary memory, that means, that in each of these address registers different addresses are used for accessing the required instructions after a branch instruction is executed.

Document JP—A—47 16 045 describes a microprogram apparatus which comprises a microprogram memory consisting of storage modules being parallelly arranged and in which the instructions are also parallelly stored in a sequence. The microprogram memory is accessed by an address register in combination with an address decoder. During one access, all instructions stored parallel in the modules are read out. From these accessed instructions only one is selected by a microprogram storage module selector and applied to an output buffer register for holding temporarily the selected instructions. The module selector is a counter which is incremented by a special signal being produced by the instruction currently executed, which means, that the module selector selects the accessed instruction in a sequence even there if there is no branch instruction in a program, all memory modules are used. Due to sequentially selecting of the instructions, the address register has to specify a new address if a branch condition is satisfied, to access the branch destination instruction. Therefore, a dummy cycle is produced until the branch destination instruction can be executed. This document is taken into account in the preamble of claim 1.

The object of the present invention is to provide a pipeline system for a microprogram control apparatus which enables the execution of a conditional branch instruction without the generation of a dummy cycle, to enable high speed operation of a microprogram control apparatus.

This object is solved by the pipeline system for a microprogram control apparatus according to claim 1.

The pipeline system for a microprogram control apparatus provided by the present invention has a construction wherein instructions being are pre-read thereinto, an instruction corresponding to an address is placed in a pipeline register at the same time that a program counter specifies that address, all the instructions which might be executed in a subsequent step are pre-read in parallel when a conditional branch instruction is output, and the instruction which will actually be executed is selected therefrom, so that the generation of a dummy cycle can be prevented as a consequence. To enable the pre-reading of instructions by the present invention, an "instruction which might be executed in a subsequent step" is read out from a "current address" by operating a storage configuration of instructions within a memory.

The present invention makes it possible to adopt a pipeline structure and an interleaving structure without the generation of dummy cycles, and consequently it is possible to operate the microprogram control apparatus at higher speed.

Other objects, characteristics and effects of the present invention will become more apparent from the following description, with reference to the accompanying drawings.

Brief description of the drawings

Figure 1(a) shows a conventional instruction storage configuration;

Figure 1(b) shows the instruction storage configuration in the pipeline system for a microprogram control apparatus according to the present invention;

Figure 2(a) shows an example of the conventional instruction storage configuration;

Figure 2(b) shows a first example of the instruction storage configuration in the pipeline system for a microprogram control apparatus according to the present invention;

Figure 3 is a block diagram of a first embodiment of the pipeline system for a microprogram control apparatus according to the present invention;

Figure 4 is a sequence chart of the operations of the first embodiment of Fig. 3;

Figure 5(a) shows the conventional instruction storage configuration;

Figure 5(b) shows another example of the instruction storage configuration in the pipeline system for a microprogram control apparatus according to the present invention;

Figure 6 is a block diagram of a second embodiment of the pipeline system for a microprogram control apparatus according to the present invention; and

Figure 7 is a block diagram of a third embodiment of the pipeline system for a microprogram control apparatus according to the present invention.

Best mode for carrying out the invention

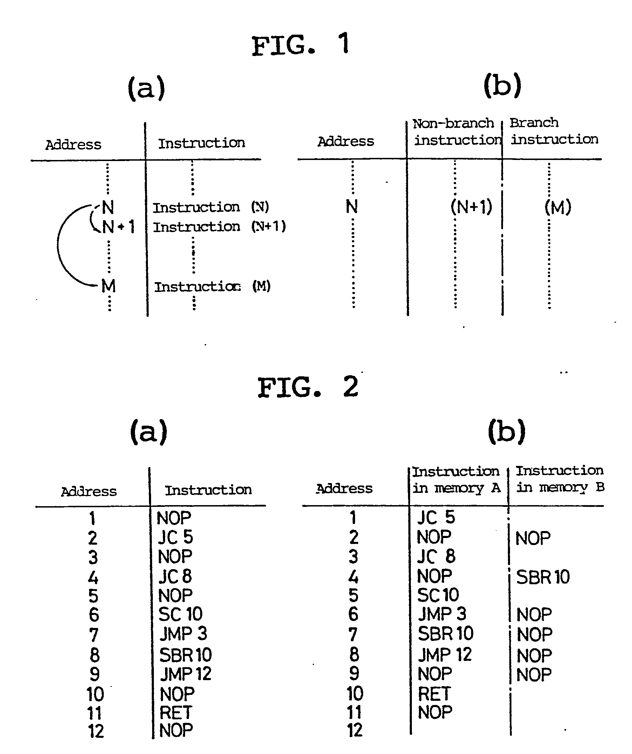

Figure 1(a) shows how a conditional branch instruction is stored in an address N in a conventional system. When a condition is satisfied at address N, control branches to an address M. If this condition is not satisfied, no branching occurs, and the procedure moves on to address (N+1). Figure 1(b) shows the instruction storage configuration according to the pipeline system of the present invention. In this system, the instructions in address (N+1) and the branch address M of the conventional system are stored at address N, enabling the pre-reading of a "subsequent instruction" within a "current address".

In the condition at address N of Fig. 1(b) is satisfied, a program counter specifies address M in the subsequent cycle. Simultaneously, an instruction (M) read out from address N is selected and held in a pipeline register.

In other words, according to the present invention, the content read out of a memory is always advanced one cycle ahead of the instruction in the program counter, and thus the pipeline register temporarily holding this content corresponds at all times to the instruction in the program counter.

The following is a more detailed description of the present invention, according to embodiments shown in the appended Figures.

Figure 2 shows the difference between instruction storage configurations according to the conventional system and those of the pipeline system of the present invention, during the execution of the same program. Figure 2(a) shows the instruction storage configuration according to the conventional system, and Figure 2(b) shows those according to the pipeline system of the present invention. In these Figures, NOP denotes 'no operation', whereby the program counter is incremented, IMP denotes 'jump' whereby branching to an address given by the operand thereof is executed, JC denotes 'jump conditionally' whereby branching to the address in the operand is executed only when a condition is satisfied, SBR denotes 'subroutine control', and SC denotes 'subroutine control conditionally' whereby the subroutine is controlled only when a condition is satisfied. RET denotes 'return'.

In the conventional instruction storage configuration shown in Fig. 2(a), instructions to be executed are stored in addresses in run order. In contrast therewith, in the instruction storage configuration of a test pattern generator of the present invention, shown in Fig. 2(b), an instruction that might be executed in the subsequent step is stored at the current address. The instruction storage configuration of Fig. 2(b) can be obtained from that of Fig. 2(a) by a simple procedure. Instructions stored in each of addresses subsequent to corresponding addresses in Fig. 2(a) are stored in a memory A of Fig. 2(b). For instance, instruction JC 5 stored in address 1 of memory A of Fig. 2(b) is the same as that stored in address 2 of Fig. 2(a). Similarly, an instruction NOP stored in address 2 of memory A of Fig. 2(b) is the same as that stored in address 3 of Fig. 2(a). When any instruction is stored in a memory B of Fig. 2(b), a branch instruction or a conditional branch instruction is stored in a corresponding address of Fig. 2(a). Instructions stored in memory B of Fig. 2(b) are the same as those stored in branch addresses specified by branch instructions stored in the corresponding addresses of Fig. 2(a). SBR 10 stored in address 4 of memory B of Fig. 2(b), for instance, is the same as an instruction stored in address 8 specified by branch instruction JC 8 of address 4 of Fig. 2(a). Similarly, an instruction NOP stored in address 6 of memory B of Fig. 2(b) is the same as an instruction stored in address 10 specified by branch instruction SC 10 of address 6 of Fig. 2(a).

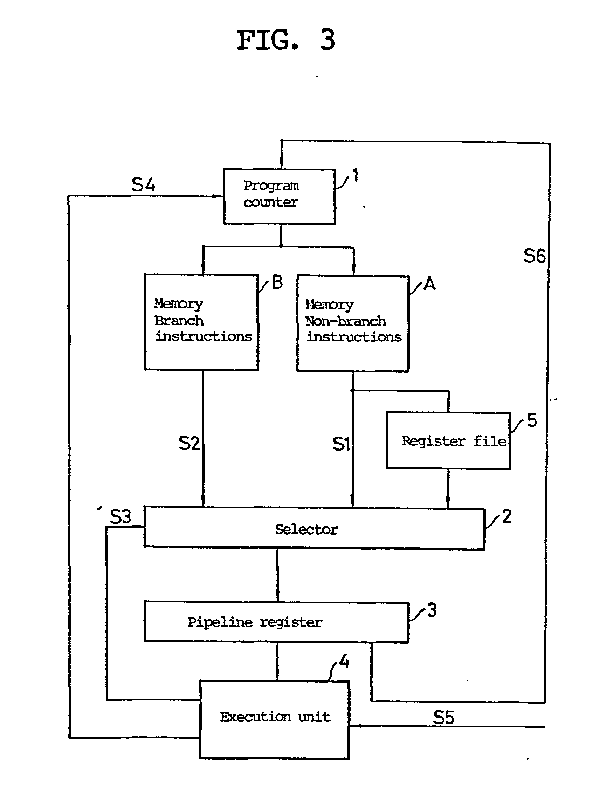

Figure 3 is a block diagram of a first embodiment of the pipeline system for a microprogram control apparatus according to the present invention. In this Figure, a program counter 1 specifies addresses in memories A and B in which instructions are stored in the configuration shown in Fig. 2(b). A selector 2 selects and outputs either a subsequent-address instruction S1 or a branch-address instruction S2 which are output from the memories A and B, respectively. A pipeline register 3 temporarily holds the instruction selected by the selector 2. An execution unit 4 decodes the instruction held temporarily in the pipeline register 3 and specifies the operations of the program counter 1 and the selector 2, etc. A register file 5 is a memory which temporarily holds an instruction stored in a return address when a subroutine is called. This memory is not essential to the present invention.

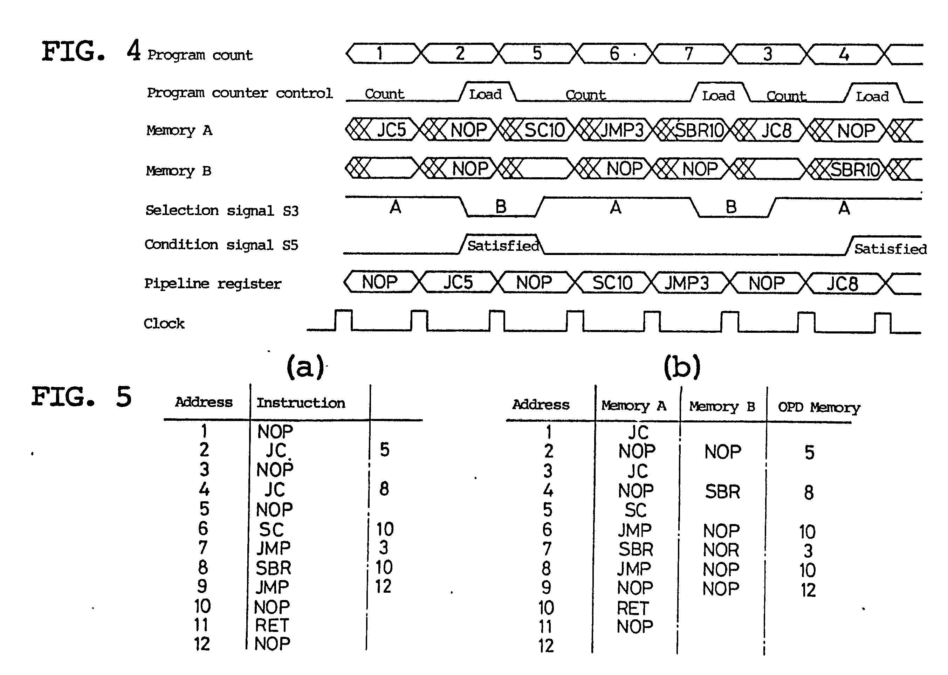

The operation of the first embodiment of Fig. 3 will now be described with reference to the sequence chart of Fig. 4. Figure 4 shows the sequence followed when the program example of Fig. 2(b) is run. In the initial state, an instruction corresponding originally to the address at which the operation starts (the instruction which should have been stored in the start address in the conventional system) is input to the pipeline register 3. Since the operation starts at address 1 in Fig. 4, instruction NOP is stored in the pipeline register 3. The execution unit 4 then interprets this instruction, and outputs a program counter control signal S4 to the program counter 1 to specify incrementation, and a selection signal S3 to the selector 2 to specify the selection of an instruction S1 for the subsequent address (non-branch instruction) from memory A. At the next clock, the program counter 1 specifies address 2, and the instruction/JC 5 corresponding originally to address 2 (the instruction which should have been stored at address 2 in the conventional system) is held temporarily in the pipeline register 3. The execution unit 4 decodes the instruction JC 5 and a condition signal S5, and outputs the program counter control signal S4 to the program counter 1 to specify parallel data load if the condition is satisfied, and outputs the selection signal S3 to the select 2 to specify the selection of a branch instruction S2 (instruction during branching) from memory B. At the subsequent clock, the program counter 1 specifies address 5 when it receives a branch address S6 output from the pipeline register 3, while NOP, the instruction originally at address 5, is retained in the pipeline register 3. These operations are repeated so that the instructions originally in the addresses specified by the program counter 1 are held in the pipeline register 3, and thus all the instructions which might be executed in subsequent steps are set up at the input to the register 3 through the selector 2. As can be seen from this description, branching is enabled without the generation of any dummy cycle, even when the branching is conditional, according to the present embodiment.

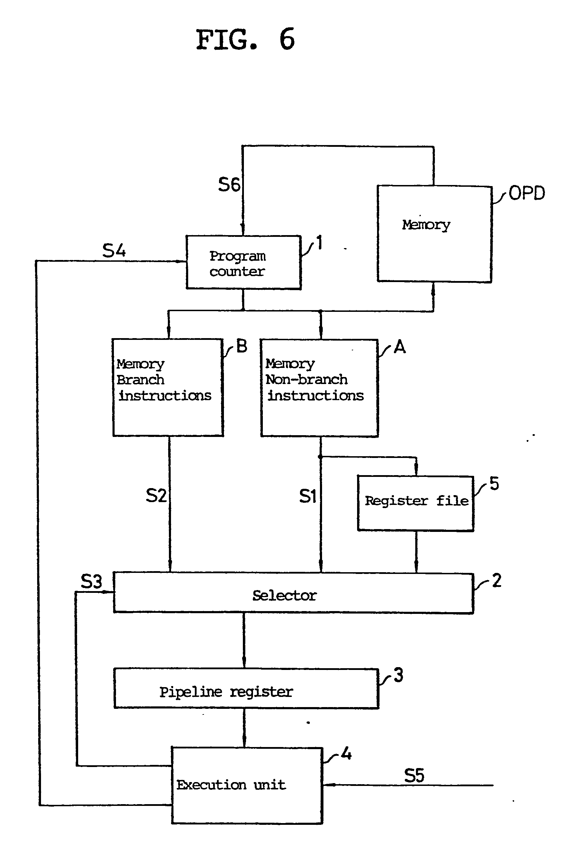

Figure 5 is similar to Fig. 2 and shows the difference between the instruction storage configurations according to the conventional system and the pipeline system of the present invention, when executing the same program. Figure 5(a) shows the instruction storage configuration according to the conventional system, which is identical to that of Fig. 2, and Figure 5(b) shows the instruction storage configuration of a second embodiment of the present invention shown in Figure 6. This Figure differs the instruction storage configuration of Fig. 2(b) in that the operand parts specifying branch addresses are not stored in memories A and B. Another memory OPD used exclusively for operands is provided instead, and these operands (branch addresses) are stored in the same addresses within this memory as those in the conventional system.

Figure 6 shows the second embodiment of the present invention which is provided with these memories A, B and OPD. In this Figure, the memories A, B and OPD each hold the instructions and operands shown in Fig. 5(b). The operations of the second embodiment of Fig. 6 are the same as those of the first embodiment of Fig. 3, except that the memory OPD is added, and the bit widths of the memories A and B are reduced.

In the above description of the embodiments, the case in which branching to either of two addresses occurs has been used as an example. The present invention is not, of course, limited to this case, but is applicable to any case in which branching to N addresses, occurs, by providing N parallel memories. The instructions used in these embodiments have been assumed to be stored in a configuration which enables pre-reading by one cycle. When the instructions are stored in a configuration enabling pre-reading by two or more cycles, interleaving of the memories is possible.

In the description of the embodiments of Figs. 3 and 6, the memories A and B, or the memories A, B and OPD, are assumed to be independent from one another. It is possible to use a single memory in which two or three independent storage regions are provided at the same address.

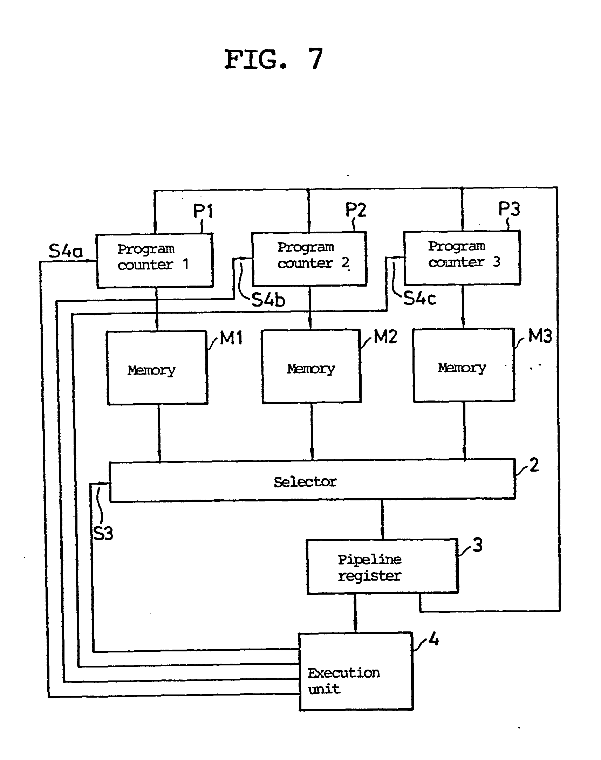

Figure 7 is a block diagram of a third embodiment of the present invention, wherein three-way interleaving is performed. In this embodiment, interleaving is performed among three units, i.e. a program counter P1 and a memory M1, a program counter P2 and a memory M2, and a program counter P3 and a memory M3. Instructions can be read from each of the memories M1, M2 and M3 at an apparent speed three times the speed at which each of the memories M1, M2 and M3 operates.

The following is a description of the operations of the embodiment of Fig. 7. The program counters P1, P2 and P3 are updated sequentially by program counter control signals S4a, S4b and S4c output from the execution unit 4. All the instructions which might be executed three cycles after an instruction which is stored in address N in the conventional system are stored in address N of each of the memories M1, M2 and M3. The selector 2 selects sequentially an output from each of the memories M1, M2 and M3, and then selects one of the plurality of selected instructions output from the memories M1, M2 and M3 as the instruction to be executed next, in accordance with a selection signal S3 from the execution unit 4. The pipeline register 3 temporarily holds the instruction selected by the selector 2. The execution unit 4 outputs the selection signal S3 to the selector 2 in accordance with the instruction held temporarily in the pipeline register 3, while outputting the program counter control signal S4a, S4b or S4c to one of the three sequentially-selected program counters P1, P2 and P3.

As is clear from the above description of the operation, the count of the program counter P1 is updated, a new address is specified in, for instance, memory M1, and three cycles later, one of a plurality of instructions read from the memory M1 by the selector 2 is selected and output. Since all the instructions which might be executed three cycles later are stored beforehand in memory M1, as described above, the next instruction to be executed can be read out without generating a dummy cycle.

Three-way interleaving is assumed in the third embodiment described above, but the present invention is not, of course, limited to this case. In the first, second and third embodiments, the pipeline register 3 for temporary storage is provided next to the selecting means 2, but the present invention is not limited to this construction, the selecting means may be provided next to the temporary storage means.

As can be seen from the above description, the present invention enables the adoption of both a pipeline construction and an interleaving construction, without any generation of dummy cycles, and consequently it is possible to further increase the speed of the microprogram control apparatus.

Industrial applicability

The present invention is extremely effective when, for instance, applied to a control device for a pattern generator of an IC testing apparatus which tests semiconductor storage elements and large-scale integrated logic circuits, etc. The present invention is not, of course, limited to this application, but can be adapted to a wide variety of microprogram controllers.

## Claims

1. A pipeline system for a microprogram control apparatus comprising:

storage means with a plurality of parallel memories (A; B) for storing instructions;

an address specifying means (1), which outputs address signals to said storage means, wherein all parallel memories (A; B) are addressed by one address signal during each access;

a selecting means (2), which selects one instruction from a plurality of instructions read out simultaneously of said storage means by the address specifying means (1) during one access;

holding means (3), which holds the selected instruction temporarily; and

an execution unit (4), which decodes said temporarily held instruction; characterized in

that in one (A) of the plurality of memories (A; B) instructions and branch instructions are stored, wherein in the other memories (B) of the plurality of memories the destination instructions of the branch instructions are stored,

wherein in the memories in an n-th address all instructions are stored, which are executable a number of cycles after the execution of a branch instruction currently held in said holding means (3), when said n-th address is specified by said address specifying means (1);

that the execution unit (4) provides to said address specifying means (1) a control signal (S4), which indicates that said branch condition is satisfied, and provides to said selecting means (3) a selection signal (S3) indicating, which instruction has to be selected from the instruction stored in said n-th address.

2. The pipeline system for a microprogram control apparatus according to Claim 1, characterized in that a memory used exclusively for operands is added as a third memory (OPD) thereto.

3. The pipeline system for a microprogram control apparatus according to Claim 1, characterized in that a plurality of pairs of said address specifying means ($P_1$, $P_2$, $P_3$) and said storage means (M1, M2, M3) are provided, and each address specifying means is constructed so that it is updated by a program counter control signal output from said execution unit (4).

## Patentansprüche

1. Pipeline-System für eine Microprogramm-Steuervorrichtung, das aufweist:

eine Speichereinrichtung mit einer Vielzahl von parallelen Speichern (A; B) zum Speichern von Befehlen;

eine Adressenspezifikationseinrichtung (1), die Adress-Signale an die Speichereinrichtung ausgibt, wobei alle parallelen Speicher (A; B) durch ein Adress-Signal während jedes Zugriffs adressiert werden;

eine Selektiereinrichtung (2) die einen Befehl aus einer Vielzahl von Befehlen selektiert, die gleichzeitig durch die Adressenspezifikationseinrichtung (1) aus der Speichereinrichtung während eines Zugriffs ausgelesen werden;

eine Halteeinrichtung (3), die den selektierten Befehl vorübergehend festhält; und

eine Ausführungseinheit (4), die den vorübergehenden festgehaltenen Befehl dekodiert; dadurch gekennzeichnet, daß

in einem Speicher (A) der Vielzahl von Speichern (A; B) Befehle und Zweigbefehle gespeichert werden, wobei in den anderen Speichern (B) der Vielzahl von Speichern die Bestimmungsbefehle der Zweigbefehle gespeichert werden, wobei in der n-ten Adresse in den Speichern alle Befehle gespeichert werden, die während einer Zahl von Zyklen nach dem Ausführen eines Zweigbefehls, der momentan in der Halteeinrichtung (3) gehalten wird, ausgeführt werden können, wenn die n-te Adresse durch die Adressenspezifikationseinrichtung (1) spezifiziert wird;

die Ausführungseinheit (4) der Adressenspezifikationseinrichtung (1) ein Steuersignal (S4) gibt, das angibt, daß die Zweigbedingung erfüllt ist, und der Selektiereinheit (3) ein Selektionssignal (S3) gibt, das angibt welcher Befehl von den in der n-ten Adresse gespeicherten Befehlen selektiert wird.

2. Pipeline-System für eine Mikroprogramm-Steuervorrichtung nach Anspruch 1, dadurch gekennzeichnet, daß ein Speicher, der ausschließlich für Operanden benutzt wird, als dritter Speicher (OPD) hinzugefügt wird.

3. Pipeline-System für eine Mikroprogramm-Steuervorrichtung nach Anspruch 1, dadurch gekennzeichnet, daß eine Vielzahl von Paaren der Adressenspezifikationseinrichtung ($P_1$, $P_2$, $P_3$) und der Speichereinrichtung ($M_1$, $M_2$, $M_3$) vorhanden ist und jede Adressenspezifikationseinrichtung derart gebaut ist, daß sie durch einen Programmzähler-Steuersignalausgang von der Ausführungseinheit (4) aktualisiert wird.

## Revendications

1. Système de pipeline pour appareil de commande de microprogramme comprenant:

des moyens de stockage avec une pluralité de mémoires parallèles (A; B) pour stocker des instructions;

des moyens de détermination d'adresse (1) qui transmettent des signaux d'adresse auxdits moyens de stockage dans lesquels toutes les mémoires paralélles (A; B) sont adressées par un signal d'adresse durant chaque accès;

des moyens de sélection (2) qui selectent une instruction d'une pluralité d'instructions lues simultanément hors des moyens de stockage par lesdits moyens de détermination d'adresse (1) durant un accès;

des moyens de maintient (3) qui maintiennent l'instruction sélectionée temporairement; et

une unité d'exécution (4) qui décode ladite instruction maintenue temporairement; caractérisé en ce que

dans une mémoire (A) de la pluralité des mémoires (A; B) des instructions et des instructions de branchement sont stockées, pendant que dans les autres mémoires (B) de la pluralité des mémoires les instructions de destination des instructions de branchement sont stockées, dans une n-ième adresse dans les mémoires toutes les instructions sont stockées qui sont exécutables pendant un nombre de cycles après l'exécution d'une instruction de branchement actuèllement maintenue dans lesdits moyens de maintient (3) quand ladite n-ième adresse est spécifiée par lesdits moyens de détermination d'adresse (1);

l'unité d'exécution (4) donne un signal de control (S4) aux dits moyens de détermination d'adresse (1) indiquant que la dite condition de branchement est satisfaite, et donne un signal de sélection (S3) auxdits moyen de sélection (3) indiquant quelle instruction doit être sélectionnée des instructions stockées dans ladite n-ième adresse.

2. Système de pipeline pour appareil de commande de microprogramme selon la revendication 1, caractérisé ce qu'une mémoire utilisée exclusivement pour des opérandes y est ajoutée comme troisième mémoire (OPD).

3. Système de pipeline pour appareil de commande de microprogramme selon la revendication 1, caractérisé en ce qu'une pluralité de paires desdits moyens de détermination d'adresse ($P_1$, $P_2$, $P_3$) et desdits moyens de stockage ($M_1$, $M_2$, $M_3$) est pourvue et en ce que chaque moyen de détermination d'adresse est construit de façon à être actualisé par une sortie de signal de contrôle de compteur d'instructions de ladite unité d'exécution (4).

# FIG. 1

## (a)

| Address | Instruction |
|---------|-------------|
| ⋮ | ⋮ |
| N | Instruction (N) |
| N+1 | Instruction (N+1) |
| ⋮ | ⋮ |
| M | Instruction (M) |
| ⋮ | ⋮ |

## (b)

| Address | Non-branch instruction | Branch instruction |
|---------|------------------------|--------------------|
| ⋮ | ⋮ | ⋮ |
| N | (N+1) | (M) |
| ⋮ | ⋮ | ⋮ |

# FIG. 2

## (a)

| Address | Instruction |
|---------|-------------|
| 1 | NOP |
| 2 | JC 5 |
| 3 | NOP |
| 4 | JC 8 |
| 5 | NOP |
| 6 | SC 10 |
| 7 | JMP 3 |
| 8 | SBR 10 |
| 9 | JMP 12 |
| 10 | NOP |
| 11 | RET |
| 12 | NOP |

## (b)

| Address | Instruction in memory A | Instruction in memory B |
|---------|-------------------------|-------------------------|
| 1 | JC 5 | |
| 2 | NOP | NOP |
| 3 | JC 8 | |
| 4 | NOP | SBR 10 |
| 5 | SC 10 | |
| 6 | JMP 3 | NOP |
| 7 | SBR 10 | NOP |
| 8 | JMP 12 | NOP |
| 9 | NOP | NOP |
| 10 | RET | |
| 11 | NOP | |
| 12 | | |

1

# FIG. 3

**FIG. 4**

Timing diagram showing: Program count (1, 2, 5, 6, 7, 3, 4); Program counter control (Count / Load / Count / Load / Count / Load); Memory A (JC5, NOP, SC10, JMP3, SBR10, JC8, NOP); Memory B (NOP, NOP, NOP, SBR10); Selection signal S3 (A, B, A, B, A); Condition signal S5 (Satisfied, Satisfied); Pipeline register (NOP, JC5, NOP, SC10, JMP3, NOP, JC8); Clock.

**FIG. 5**

(a)

| Address | Instruction | |
|---|---|---|
| 1 | NOP | |
| 2 | JC | 5 |
| 3 | NOP | |
| 4 | JC | 8 |
| 5 | NOP | |
| 6 | SC | 10 |
| 7 | JMP | 3 |
| 8 | SBR | 10 |
| 9 | JMP | 12 |
| 10 | NOP | |
| 11 | RET | |
| 12 | NOP | |

(b)

| Address | Memory A | Memory B | OPD Memory |
|---|---|---|---|
| 1 | JC | | |
| 2 | NOP | NOP | 5 |
| 3 | JC | | |
| 4 | NOP | SBR | 8 |
| 5 | SC | | |
| 6 | JMP | NOP | 10 |
| 7 | SBR | NOR | 3 |
| 8 | JMP | NOP | 10 |
| 9 | NOP | NOP | 12 |
| 10 | RET | | |
| 11 | NOP | | |
| 12 | | | |

EP 0 142 562 B1

# FIG. 6

# FIG. 7